(19) Europäisches Patentamt

European Patent Office

Office européen des brevets

(11) **EP 1 003 009 A1**

(12) **EUROPEAN PATENT APPLICATION**

(43) Date of publication:
24.05.2000 Bulletin 2000/21

(51) Int. Cl.$^7$: **G01B 7/008**

(21) Application number: **98310299.7**

(22) Date of filing: **16.12.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.10.1998 JP 30283198**

(71) Applicants:
• **Daito Mechatronics Co. Ltd.**
**Nagoya-shi, Aichi-ken (JP)**
• **Tokai Kyohan Co., Ltd.**
**Nagoya-shi, Aichi-ken (JP)**

• **Dai-Ichi Sokuhan Works Co.**
**Ojiya-shi, Niigata-ken (JP)**

(72) Inventor: **Sakai, Katsumi**
**Midori-ku, Nagoya-shi, Aichi-ken (JP)**

(74) Representative:
**Bannerman, David Gardner et al**
**Withers & Rogers**
**Goldings House**
**2 Hays Lane**
**London SE1 2HW (GB)**

(54) **Three-dimensional coordinates measuring instrument**

(57)     The three-dimensional coordinates measuring instrument comprises a rotary column stood vertically in rotatable state on a measuring table, a horizontal arm fixed horizontally on the upper end of the rotary column and projecting at one side, a horizontal moving part arranged in movable state on the horizontal arm, a Z-axis moving part arranged at the horizontal moving part in movable state in the Z-axis direction hence the vertical direction, and a moving head mounted at the lower end of the Z-axis moving part and having a measuring unit or a shape measuring part.

Fig.1

**Description**

Background of the Invention

1. Field of the Invention

The present invention relates to a three-dimensional coordinates measuring instrument which measures three-dimensional coordinates of contours or outlines in various sorts of machine work parts.

2. Description of the Prior Art

A measuring instrument is known as such a three-dimensional coordinates measuring instrument in the prior art, where a touch probe is mounted on a moving head of an X, Y, Z- axes moving mechanism, and a linear scale for detecting position of X, Y, Z axes is installed on each moving shaft of the X, Y, Z axes, and when the touch probe is contacted with a surface of an article to be measured, the position data from the linear scale of each of the X, Y, Z axes are taken by a microcomputer and the three-dimensional coordinates regarding outside contour of the article to be measured are stored.

In such a three-dimensional coordinates measuring instrument in the prior art, however, when the measurement with high precision is intended, the rigidity of the X. Y. Z axes moving mechanism must be made high and the structure must be made strong and large size such that the structure of the X. Y. Z- axes moving mechanism is made bridge type (housing type) structure of high rigidity for example, and in an X. Y. Z axes moving mechanism of small size and simple structure, there is a problem that the measuring error is produced considerably and the measurement of high precision can not be easily performed. Also in the X. Y. Z axes moving mechanism for moving each of the X. Y. Z axes linearly, since the moving head is held by hands and the three axes are moved, there is a problem that the moving operation is very difficult and the measurement of the three-dimensional coordinates by manual operation can not be performed efficiently and easily.

Summary of the Invention

In a three-dimensional coordinates measuring instrument of the present invention, a rotary column is stood vertically on a measurement table in rotatable state and a rotary column motor for rotating and driving the rotary column is installed, and a rotary encoder outputting an angle position signal in response to the rotational angle of the rotary column is installed. Further a horizontal arm is fixed horizontally on the upper end portion of the rotary column, and a horizontal moving part is installed movably in the horizontal direction on the horizontal arm, and at the rotary column side on the horizontal arm, a horizontal drive motor for moving and driving the horizontal moving part in the horizontal direction is installed, and a horizontal linear encoder outputting a horizontal position signal indicating the moving position of the horizontal moving part is installed. Further a Z-axis moving part is arranged movable vertically within the horizontal moving part, and a vertical driving motor for moving and driving the Z-axis moving part in the vertical direction is arranged at the rotary column side on the horizontal arm, and a vertical linear encoder outputting a Z-coordinates signal indicating the moving position of the Z-axis moving part is installed. Further a measuring unit having means for generating a contact signal in the state of contacting the top end with an article to be measured on the measuring table is mounted on a moving head installed at the lower end of the Z-axis moving part.

Further the three-dimensional coordinates measuring instrument is provided with three-axes control means for driving and controlling the rotary column motor, the horizontal drive motor and the vertical drive motor, in response to position data previously stored or operation of an operation switch, and for moving the measuring unit at the top end of the moving head in any direction.

Further the three-dimensional coordinates measuring instrument is provided with individual up-down counters for counting pulse signals indicating the rotational angle position, the horizontal position and the vertical position from the rotary encoder, the horizontal linear encoder and the vertical linear encoder respectively, and is also provided with a counter circuit for latching the up-down counter when the contact signal from the measuring unit is inputted, and with processing unit for reading the count value of each counter when the counter circuit is latched, for calculating the Z-coordinates from the data corresponding to the vertical position, and for calculating the X-coordinates and the Y-coordinates from the data corresponding to the horizontal position and the data corresponding to the rotational angle position of the rotary encoder.

In the three-dimensional coordinates measuring instrument in such constitution, when the three-dimensional coordinates of contour shape of the article are to be measured, the article to be measured is held on the measurement table and the rotary column motor is driven and the rotary column is rotated, in response to the previously stored position data or the operation switch is operated, and the horizontal drive motor is driven and the horizontal moving part is moved and the vertical drive motor is driven and the Z-axis moving part is moved, thereby the moving head is moved in any of the X. Y. Z directions and the top end of the measuring unit is contacted with the surface of the article to be measured.

Then since the moving head hence the measuring unit is moved due to the linear motion of the horizontal moving part and the Z-axis moving part together with the rotation of the rotatory column, the measuring unit can be moved more simply and more easily in comparison with a measuring instrument in structure that the three axes, X-axis, Y-axis and Z-axis, are moved linearly in the prior art, and the working efficiency of the measurement is significantly improved.

If a contact signal is generated due to the contact of the measuring unit with the article to be measured, the counter circuit latches each up-down counter and the data processing means reads the count values of the up-down counters for counting pulse signals indicating the rotational angle position, the horizontal position and the vertical position respectively from the counter circuit.

The data processing means calculates the Z-coordinates based on the data corresponding to the vertical position from the data of the read count values, and calculates the X coordinates and the Y coordinates from the data corresponding to the horizontal position and the data corresponding to the rotational angle position of the rotary encoder.

In general, in a measuring instrument of cantilever type where a horizontal arm is mounted on a rotary column, error of the measured value is liable to be produced due to deflection of the rotary column or the horizontal arm. However, in the measuring instrument in the above-mentioned constitution, since the horizontal drive motor is arranged at the rotary column side on the horizontal arm and the vertical drive motor is arranged at the rotary column side on the horizontal arm, the load applied to the top end side of the horizontal arm is reduced and the deflection of the horizontal arm is not easily produced and the error due to this becomes the minimum and the exact measurement data can be obtained.

Further a counter circuit having individual up-down counters for counting pulse signals indicating the rotational angle position, the horizontal position and the vertical position from the rotary encoder, the horizontal linear encoder and the vertical linear encoder respectively is installed, and when the contact signal is inputted from the measuring unit, since the up-down counter is latched and the data of the count value are used in the calculation of the coordinates, in comparison with general system in the prior art where the position data after stopping the drive system of each axis are inputted and the coordinates are calculated, the moving error up to the complete stopping of the exact position data can be obtained.

An object of the present invention is to provide a three-dimensional coordinates measuring instrument in the above-mentioned constitution where a moving mechanism in relatively small size and simple structure is used, and the three-dimensional coordinates measurement of high precision with no error can be performed easily and efficiently.

Another object of the present invention is to provide a three-dimensional coordinates measuring instrument where even when an article to be measured includes an intricate outside shape or a fine concave or convex portion, the three-dimensional coordinates measurement can be performed efficiently, and even the outside shaft of the article of soft material can be measured.

Brief Description of the Drawings

Fig. 1 is a front view of a three-dimensional coordinates measuring instrument in a first embodiment of the invention;

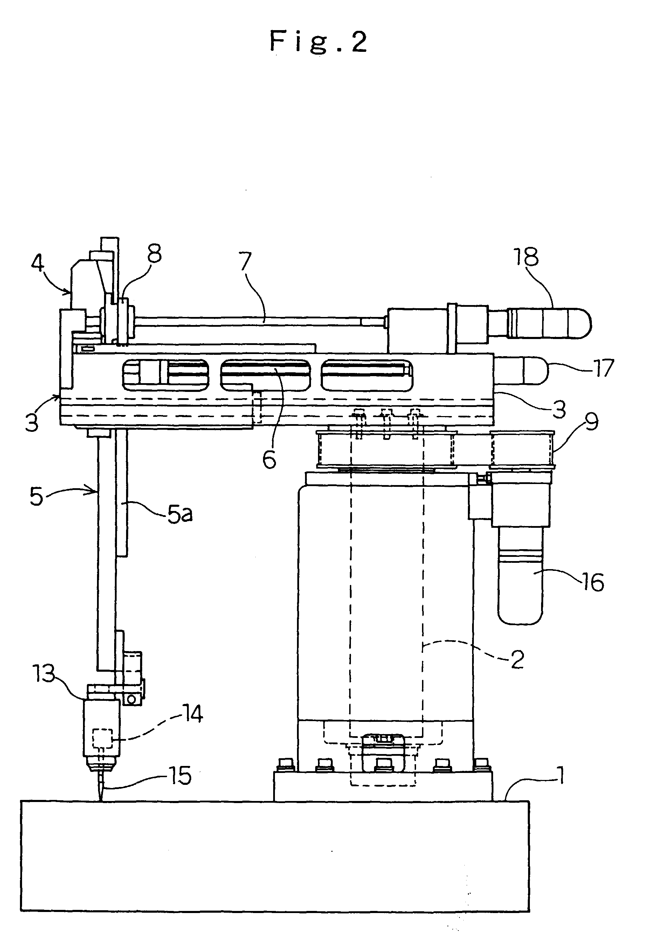

Fig. 2 is a rear view of the three-dimensional coordinates measuring instrument;
Fig. 3 is a right side view of the three-dimensional coordinates measuring instrument;
Fig. 4 is a plan view of the three-dimensional coordinates measuring instrument;

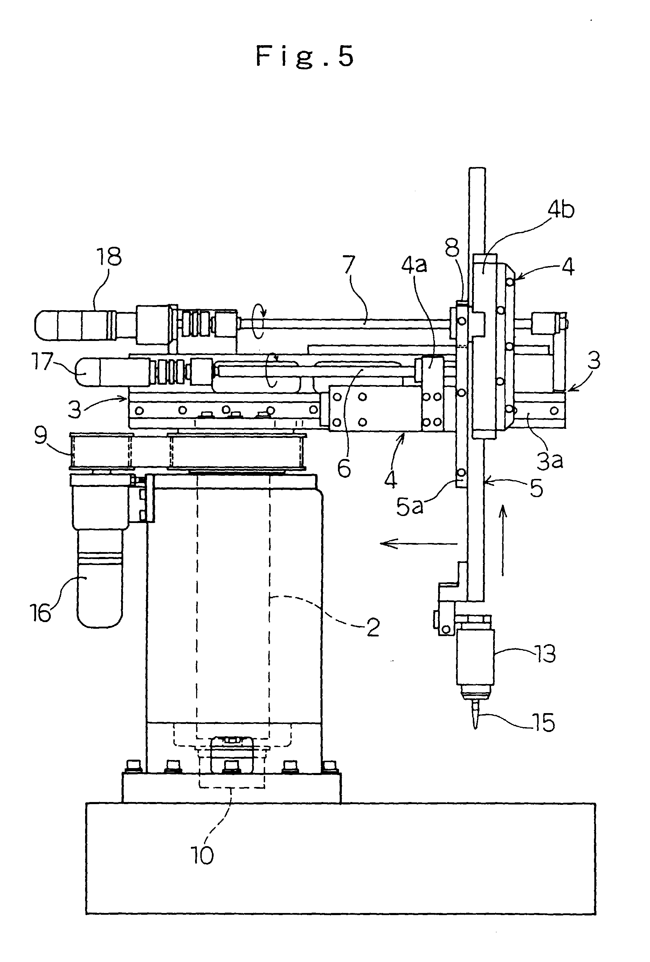

Fig. 5 is a front view of the three-dimensional coordinates measuring instrument in operation state;
Fig. 6 is a block diagram of a control system of the three-dimensional coordinates measuring instrument;
Fig. 7 is an explanation diagram showing values of X coordinates and Y coordinates;
Fig. 8 is a front view of a three-dimensional coordinates measuring instrument in a second embodiment;
Fig. 9 is a rear view of the three-dimensional coordinates measuring instrument;
Fig. 10 is a right side view of the three-dimensional coordinates measuring instrument;
Fig. 11 is a front view of the three-dimensional coordinates measuring instrument in operation state;
Fig. 12 is a block diagram of a control system of the three-dimensional coordinates measuring instrument;
Fig. 13 is a sectional view of a shape measuring part;
Fig. 14 is a bottom view of the shape measuring part;
Fig. 15 is an explanation diagram when shape of an article is measured using light scanning of a slit ray;
Fig. 16 is a block diagram of a control circuit of the shape measuring part; and
Fig. 17 is a timing chart of blinking of a laser light and an explanation diagram of a brightness image.

Description of the Preferred Embodiments

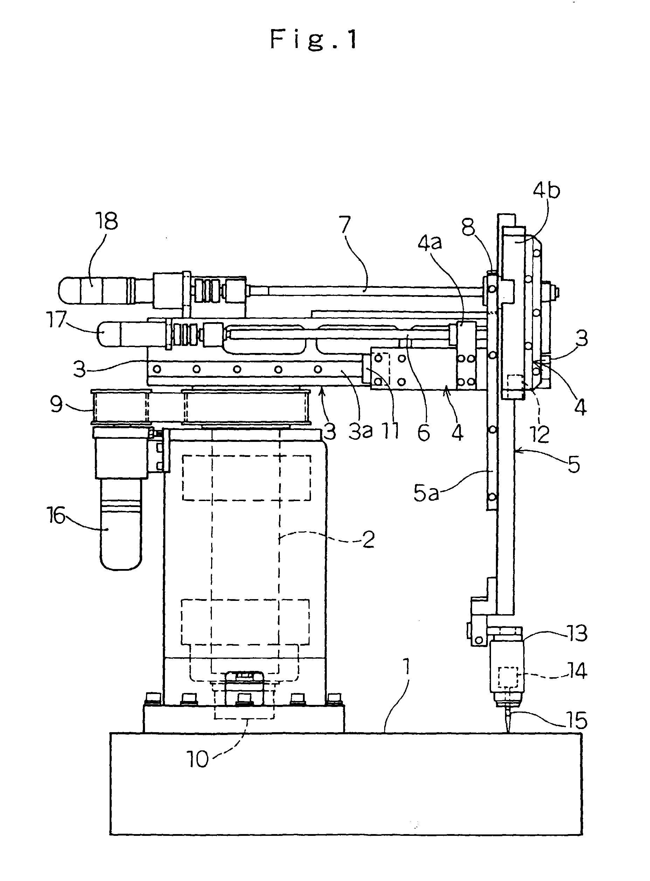

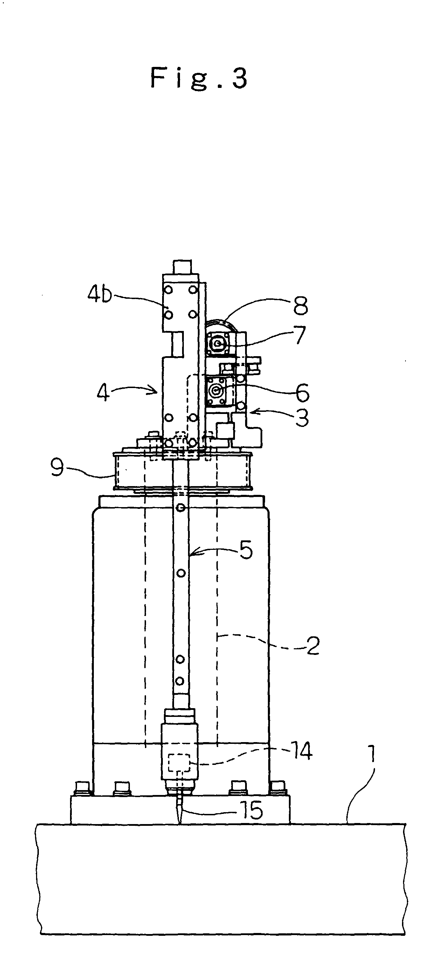

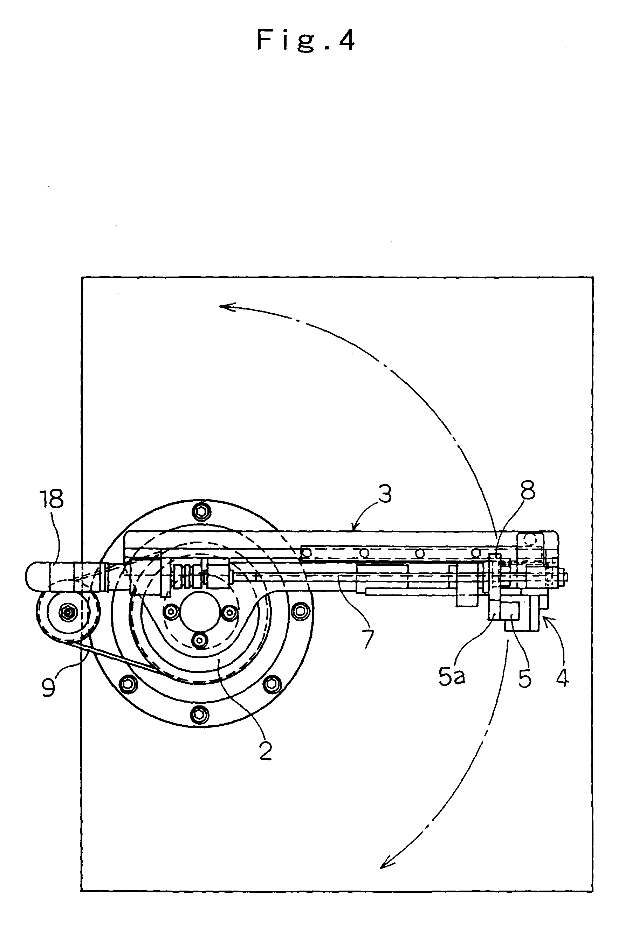

An embodiment of the present invention will be described referring to the accompanying drawings as follows. Fig. 1 is a front view showing a main body of a three-dimensional coordinates measuring instrument, and Fig. 3 is a right side view and Fig. 4 is a plan view thereof. On the upper end of a measurement table (surface plate) 1 holding an article to be measured thereon, a rotary column 2 is stood rotatable about the vertical shaft as the rotational shaft through a precision bearing.

On the outer circumferential part of a case surrounding the rotary column 2, a rotary column motor 16 with a reduction gear is fixed longitudinally. A pulley is fixed to the rotational shaft of the motor 16 (reduction gear) and is coupled through a timing belt 9 with a pulley on the rotational shaft of the rotary column 2, which is rotated and driven at low speed within prescribed angle range by the rotary column motor 16.

A rotary encoder 10 of high precision is installed at a lower portion of the rotary column 2, and outputs a signal in response to the rotational angle position of the rotary column 2. The rotary column motor 16 contains a rotation detector 16b generating a frequency signal in response to the rotational speed. Rotation of the rotary column motor 16 is controlled by a servo driver 16a, and the frequency signal outputted from the rotation detector 16b is inputted to the servo driver 16a. A pulse signal outputted from the rotary encoder 10 is inputted to an exclusive up-down counter 19a.

A horizontal arm 3 is fixed horizontally to an upper portion of the rotary column 2. The horizontal arm 3 is provided with a guide rail 3a along the longitudinal direction, and a horizontal moving part 4 is engaged and held to the guide rail 3a and is arranged slidable in the horizontal direction. Further a ball screw 6 is pivotally supported to the horizontal arm 3 along the longitudinal direction, and a female screw part 4a provided in a part of the horizontal moving part 4 is threadedly engaged with the ball screw 6.

A horizontal drive motor 17 is fixed on the horizontal arm 3, and its rotational shaft is coupled with the terminal end of the ball screw 6. Consequently the ball screw 6 is rotated and driven by the horizontal drive motor 17, and the horizontal moving part 4 is moved in the horizontal direction. The horizontal drive motor 17 is arranged at the terminal end side of the horizontal arm 3 hence the rotary column side, and reduces the load applied to the top end side of the horizontal arm 3 and takes the load balance.

A horizontal linear encoder 11 outputting a signal in response to the moving position is provided between the engaging portions of the guide rail 3a and the horizontal moving part 4. The horizontal linear encoder 11 is provided with the magnetic scale at the side of the guide rail 3a and also provided with the magnetic resistance sensor at the moving part side, and outputs a pulse signal in frequency corresponding to the moving distance of the horizontal moving part 4 and also outputs a signal indicating the absolute position. The horizontal linear encoder 11 is constituted in integral type with the linear guide including the guide rail between the horizontal arm 3 and the horizontal moving part 4 thereby it can be constructed in small size and light weight. An optical linear encoder may be used for the horizontal linear encoder 11 instead of the magnetic linear encoder.

The horizontal drive motor 17 contains a rotation detector 17b generating a frequency signal in response to its rotational speed. The rotation of the horizontal drive motor 17 is controlled by a servo driver 17a, and a frequency signal outputted from the rotation detector 17b is inputted to the servo driver 17a. A pulse signal outputted from the horizontal linear encoder 11 is inputted to an exclusive up-down counter 19b.

A Z-axis moving part 5 is mounted slidable upward and downward on the horizontal moving part 4. That is, a guide part 4b is installed at an end portion of the horizontal moving part 4 along the vertical direction, and the Z-axis moving part 5 of square bar shape is engaged and held to the guide part 4b and is arranged slidable in the vertical direction hence the Z-axis direction.

A spline shaft 7 is pivotally supported horizontally on the horizontal arm 3, and a vertical drive motor 18 with a reduction gear is mounted on the terminal end (at the rotary column side) of the horizontal arm 3, and the terminal end of the spline shaft 7 is coupled with the rotational shaft of the motor 18 (reduction gear). The vertical drive motor 18 is arranged to the terminal end side (rotary column side) of the horizontal arm 3 in similar manner to the horizontal drive motor 17, and reduces the load applied to the top end side of the horizontal arm 3 and makes the deflection of the horizontal arm 3 little.

On the other hand, a pinion 8 is externally fitted slidable to the spline shaft 7 and is supported rotatable to the horizontal moving part 4, and a rack 5a meshing with the pinion 8 is mounted on the Z-axis moving part 5. Consequently if the spline shaft 7 is rotated by the verticaldrive motor 18, the pinion 8 is rotated and driven and theZ-axis moving part 5 is moved through the rack 5a in theZ-axis direction hence vertical direction. The pinion 8 mounted to the side of the horizontal moving part 4 is movedtogether with the horizontal moving part, but holds theengagement to the spline shaft 7 while sliding.

The Z-axis moving part 5 is provided with a vertical linear encoder 12 outputting a signal in response to its moving position. The vertical linear encoder 12 is provided with a magnetic scale at the side of the Z-axis moving part 5 and also provided with a magnetic resistance sensor at the side of the guide part 4b, and outputs a pulse signal in frequency corresponding to the moving distance of the Z-axis moving part 5 and outputs a signal indicating the absolute position. The vertical linear encoder 12 is constituted in integral type with a linear guide including a guide part between the horizontal moving part 4 and the Z-axis moving part 5 thereby it can be constructed in small size and light weight. An optical linear encorder may be used for the vertical linear encoder 12 instead of the magnetic linear encoder.

The vertical drive motor 18 contains a rotation detector 18b generating a frequency signal in response to its rotational speed. The rotation of the vertical drive motor 18 is controlled by a servo driver 18a, and the frequency signal outputted from the rotation detector 18b is inputted to the servo driver 18a. A pulse signal outputted from the vertical linear encoder 12 is inputted to an exclusive up-down counter 19c.

A moving head 13 is fixed to the lower end of the Z-axis moving part 5, and a measuring unit 15 is mounted on the moving head 13. The measuring unit 15 contains an input switch 14 of touch sensor type for example, and when the top end of the measuring unit 15 touches a surface of an article to be measured, the input switch 14 is operated and outputs a signal. The measuring unit 15 does not have a differential transformer, a linear scale or the like, and is in a simple structure having the input switch only and is available at low price.

In the measuring unit 15, in order to prevent the wrong operation, a delay circuit is installed at the output side of the input switch 14 and chattering is prevented, and after the input switch 14 is turned on, if the ON-signal is not continued until the drive system is stopped, decision is effected that the wrong operation of the input switch 14 occurs, and the measurement of the coordinates is not performed.

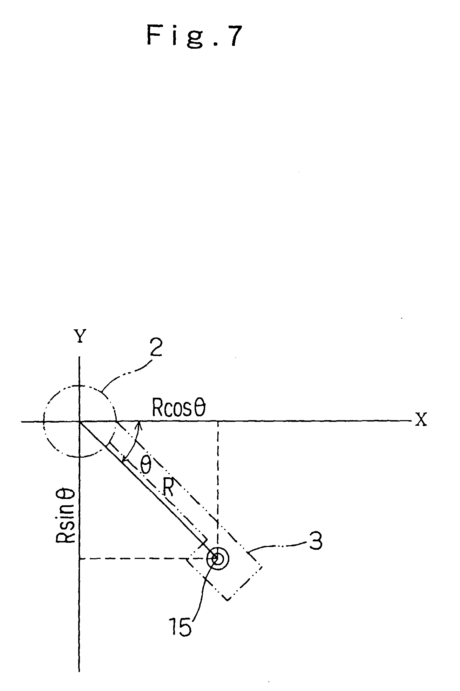

Since the three-dimensional coordinates measuring instrument body in such constitution has structure that the rotary column 2 is rotated, assuming that the rotational angle of the column be θ and the position data of the horizontal moving part 4 on the horizontal arm 3 (distance from the origin and detection distance of the horizontal linear encoder) be R, as shown in Fig. 7, the X coordinates on the X-axis are estimated from $X = R \cos \theta$ and the Y coordinates on the Y-axis are estimated from $Y = R \sin \theta$ respectively. Also the Z coordinates on the Z-axis become the position data of the Z-axis moving part 5 (output position data of the vertical linear encoder).

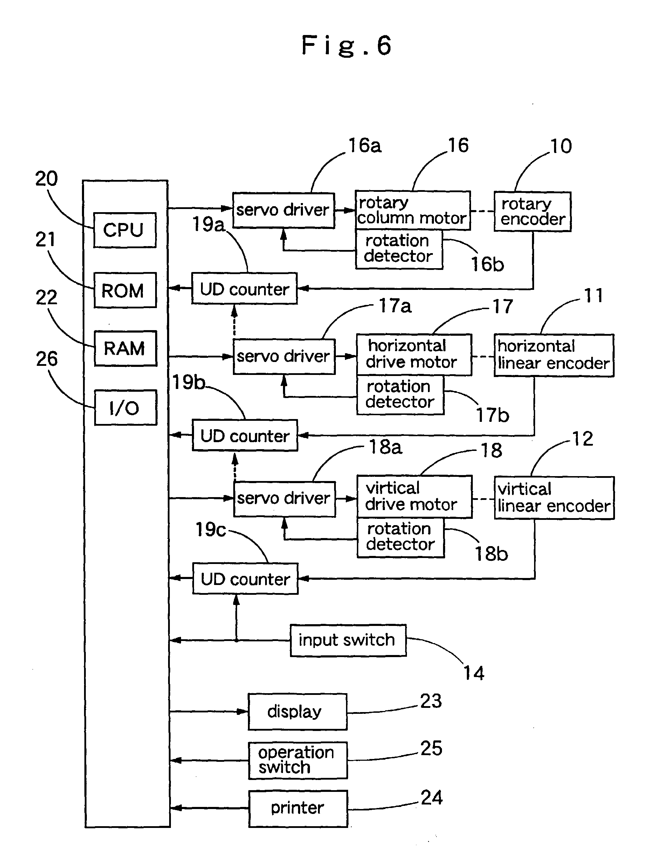

A data processing circuit of the three-dimensional coordinates measuring instrument, as shown in Fig. 6, comprises a microcomputer being a main part, and a CPU 20 performs the measuring operation of the three-dimensional coordinates based on the program data previously stored in a ROM 21. For example, when the three-dimensional coordinates measurement of a curved surface of a certain product is performed by automatic operation, the design coordinates of the curved surface are previously stored in a RAM or the like and the coordinates data are read out in sequence from a RAM 22, and a rotary column motor 16, a horizontal drive motor 17 and a vertical drive motor 18 are driven and a measuring unit 15 is moved along the curved surface. Then processing is performed in that the coordinates data of the X. Y. Z axes measured by the contacting of the measuring unit 15 are fetched.

The rotary encoder 10, the horizontal linear encoder 11 and the vertical linear encoder 12 are connected to exclusive up-down counters 19a, 19b, 19c respectively, and each of the up-down counters 19a, 19b, 19c is connected to an input/output circuit 26. Also an input switch 14, a display unit 23 such as CRT, a printer 24 and an operation switch 25 are connected to the input/output circuit 26. The output side of the input switch 14 is connected also to a latch terminal of each of the up-down counters 19a, 19b, 19c, and each of the up-down counters 19a, 19b, 19c inputs the ON-signal of the input switch 14 directly as a latch signal and holds the count value.

Next, operation of the three-dimensional coordinates measuring instrument in the above-mentioned constitution will be described. When the three-dimensional coordinates of an article are to be measured, the article is held on the measurement table 1, and the data processing circuit is at the stand-by state. The operation switch 25 is operated and the measuring unit 15 is moved to the measurement start position of the article. That is, the rotary column motor 16 is driven to rotate the rotary column 2 and the horizontal drive motor 17 is driven to move the horizontal moving part 4, and the vertical drive motor 18 is driven to move the Z-axis moving part 5, thereby the moving head 13 is moved in any of X. Y. Z directions and the top end of the measuring unit 15 is brought close to the surface of the article and is contacted therewith. Since the three-dimensional movement of the moving head 13 is performed by movement of the horizontal moving part 4 and the Z-axis moving part 5 including the rotation of the rotary column 2, the moving head 13 can be easily moved.

When the measuring unit 15 is contacted with the article, the input switch 14 within the measuring unit 15 is turned on and an input signal is sent to the CPU 20. When the input signal is inputted, the CPU 20 fetches a detection signal from the rotary encoder 10, the horizontal linear encoder 11 and the vertical linear encoder 12. A stop signal is outputted to each of servo drivers 16a - 18a, and the rotary column motor 16, the horizontal drive motor 17 or the vertical drive motor 18 during the driving is stopped. When the measuring unit 15 is contacted, the input switch 14 is turned on and the signal is inputted as a latch signal directly to each of the up-down counters 19a, 19b, 19c of the coordinates, and each of the counters 19a, 19b, 19c is latched and the count value is held. The count value data indicating each latched coordinates position are read from each of the up-down counters 19a, 19b, 19c to the CPU 20. The CPU 20 does not produce error due to the time from inputting the stop signal actually into the servo driver of the motor up to the stopping of the motor, and the inertia or the like, so that the exact position data at the time of the measuring unit 15 contacting can be fetched.

Next, using the horizontal position data R and the angle position data θ from the rotary encoder 10, the X coordinates are calculated from the formula $X = R \cos \theta$ and the Y coordinates are calculated from the formula $Y = R \sin \theta$. The data of each of the calculated X coordinates, Y coordinates and Z coordinates are written in the RAM 22.

And then the moving head 13 is moved along the surface of the article, by operation of the operation switch 25 or based on the program data previously stored in the RAM or the like automatically. If the top end of the measuring unit 15 is contacted with the surface of the article again, the input switch 14 is turned on, and the CPU 20 fetches a new detection signal from the rotary encoder 10, the horizontal linear encoder 11 and the vertical linear encoder 12. From these detection data, the horizontal position data R and the Z coordinates are calculated, and also the X coordinates, the Y coordinates and the Z coordinates are calculated and the data of each of the calculated X coordinates, Y coordinates and Z coordinates are written in the RAM 22. Such operation is repeated thereby the three-dimensional coordinates of the article are measured and stored.

Since the moving head 13 hence the measuring unit 15 is moved by the linear motion of the horizontal moving part 4 and the Z-axis moving part 5 together with the rotation of the rotary column 2 in such manner, in comparison with a measuring instrument having structure that the three axes, X-axis, Y-axis and Z-axis, are moved linearly, the measuring unit 15 can be moved simply and easily and the working efficiency of the measurement can be significantly improved.

Also since the horizontal arm 3 is of cantilever type, if the large load is applied to the top end of the horizontal arm 3, the arm is deflected and the error of the measured value is liable to be produced due to the deflection. In this embodiment, however, since the horizontal drive motor 17 and the vertical drive motor 18 are arranged at the side of the rotary column 2 and the deflection of the arm 3 is minimized, the exact measurement data with little error can be obtained.

Further since the up-down counters 19a, 19b, 19c counting output signals of the rotary encoder 10, the horizontal linear encoder 11 and the vertical linear encoder 12 measuring the moving quantity (position) of each coordinate axis are installed individually, and the ON signal of the input switch 14 at the time of the measuring unit 15 contacting is inputted as a latch signal to the up-down counters 19a, 19b, 19c and the counter is latched momentarily and the count value is held and inputted to the CPU, in comparison with a system as in a general three-dimensional measuring instrument in the prior art that when a measuring unit is contacted, a CPU recognizes the contacting and a motor is stopped and then count value of an output signal of an encoder is fetched, the error of the drive system by the motor after receiving the stop signal up to being actually stopped, and the error of the operation time of the CPU or the like can be eliminated, and the measurement precision of the three-dimensional coordinates can be significantly improved.

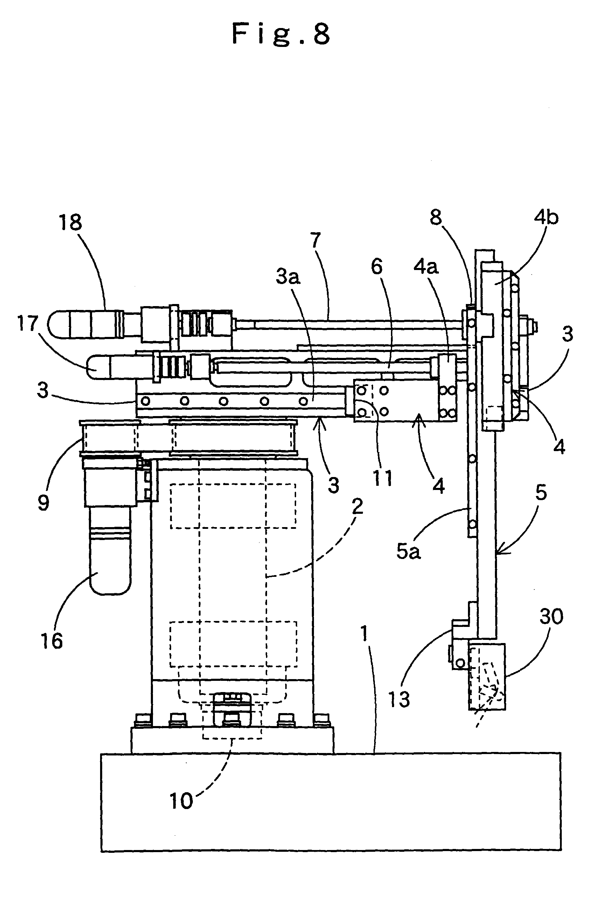

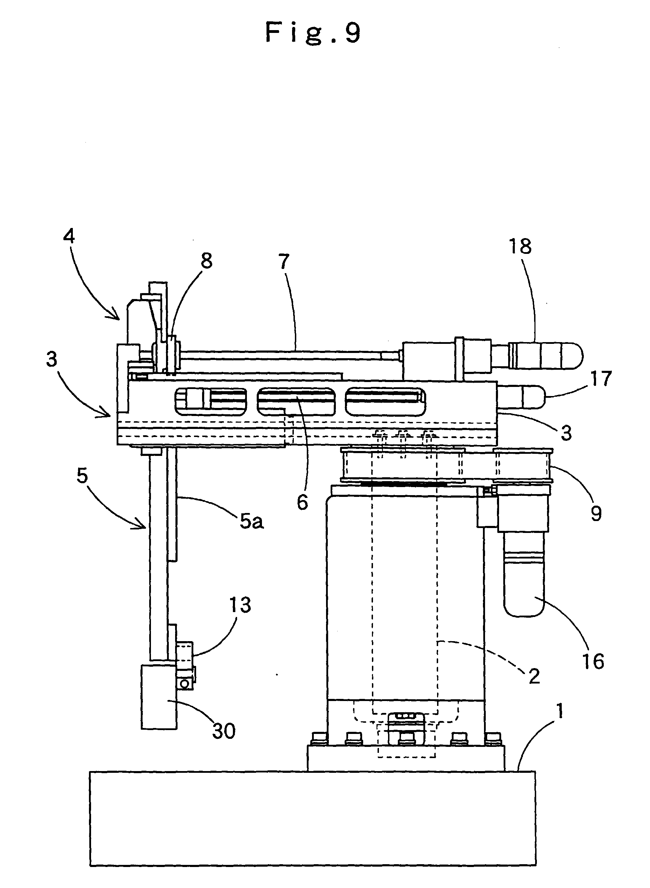

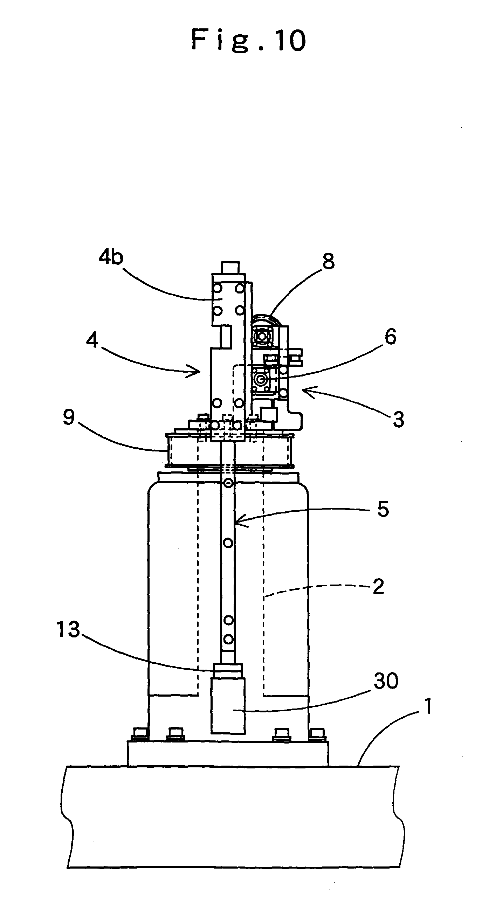

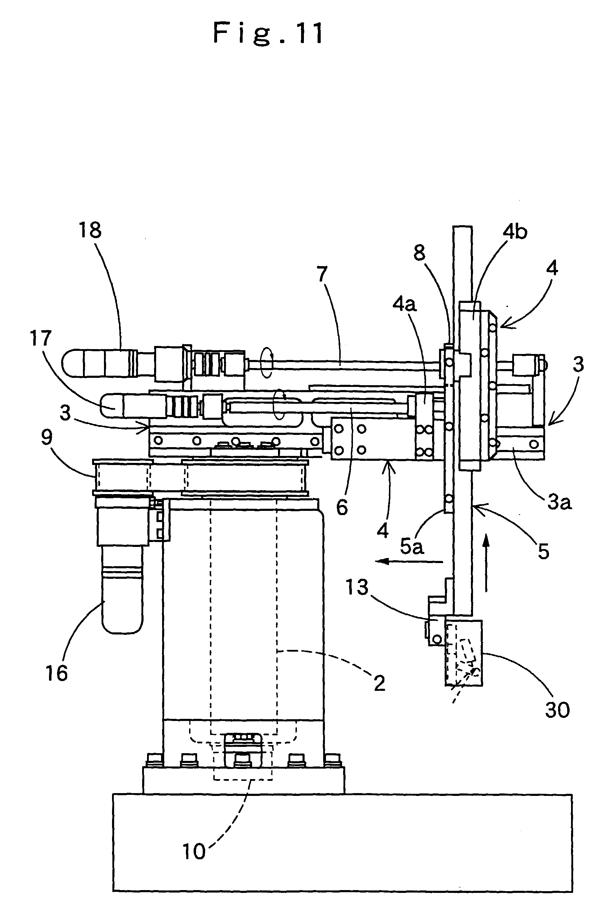

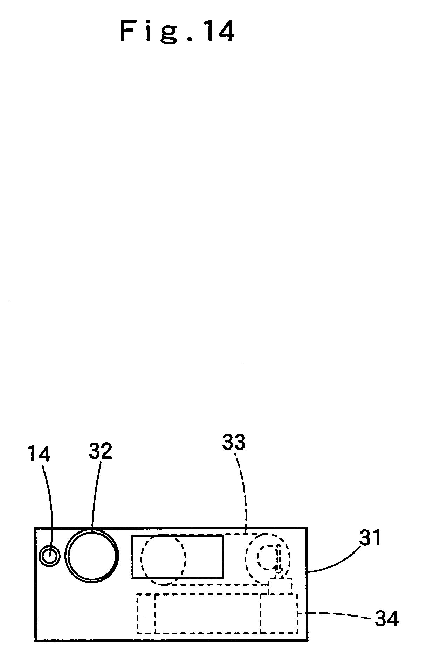

Next, a second embodiment will be described referring to Figs. 8 - 17. Parts in similar constitution to those in the first embodiment are designated by the same reference numerals, and the description of the structure shall be omitted. In the three-dimensional measuring instrument, in place of the measuring unit 15 as above described, a shape measuring part 30 for measuring an outside shape of an article to be measured at non-contact state is used. The second embodiment is similar to the first embodiment in a moving mechanism and a position measuring mechanism having a rotary column 2 stood on a measurement table (surface plate) 1 holding an article to be measured thereon, a rotary column motor 16 driving the rotary column 2, a rotary encoder 10 outputting a signal indicating the rotational angle position of the rotary column, a horizontal arm 3 fixed horizontally on the rotary column 2, a horizontal moving part 4 arranged movable in the horizontal direction on the horizontal arm, a horizontal linear encoder 11 outputting a signal indicating the horizontal moving position, a Z-axis moving part 5 arranged within the horizontal moving part 4 and movable vertically, a vertical drive motor 18 moving the Z-axis moving part 5 in the vertical direction, and a vertical linear encoder 12 outputting a signal indicating the vertical moving position of the Z-axis moving part 5.

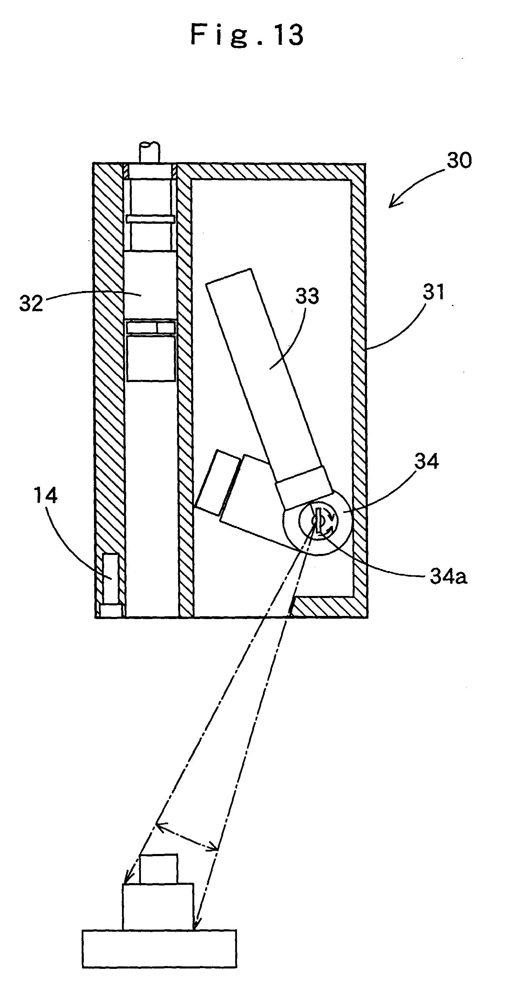

The shape measuring part 30 is mounted on the moving head 13 fixed to the lower end of the Z-axis moving part 5. The shape measuring part 30, as shown in Fig. 13, comprises a case 31, a laser unit 33 and a galvano mirror 34 installed within the case 31, for irradiating laser slit ray from an opening at the bottom part downward to an article to be measured, and a CCD camera 32 for photographing the irradiated portion.

That is, the CCD camera 32 is arranged downward within the case 31. The CCD camera 32 is provided with a CCD element and a lens optical system for forming an image of an article positioned at a prescribed distance downward onto the element. Further the laser unit 33 as a laser light source and the galvano mirror 34 as a deflection illumination device are arranged within the case 31.

In the laser unit 33, for example, a semiconductor laser oscillator is used, and the generated laser ray is outputted as a slit ray by the optical system. The galvano mirror 34 is provided with a mirror part 34a mounted on the rotary shaft of the high precision motor, and a rotational angle detector for detecting the rotational angle of the rotary shaft with high precision is installed. In the galvano mirror 34, the mirror part 34 is disposed on the optical path of the slit ray, and the slit ray reflected from the mirror part is irradiated from the opening part at the lower surface of the case 31 toward the article at lower side. As the deflection illumination device, besides the galvano mirror 34, a polygon mirror or the like may be used.

Further at lower side within the case 31, a distance sensor 14 for detecting the distance from the measuring part to the article is arranged. In the distance sensor 14, for example, an ultrasonic distance sensor using an ultrasonic oscillator and an ultrasonic sensor, or a distance sensor for detecting the distance by the triangulation using laser ray may be used. Such a distance sensor may be that capable of detecting the schematic distance between the measuring part 30 and the article, and need not be that of so high precision.

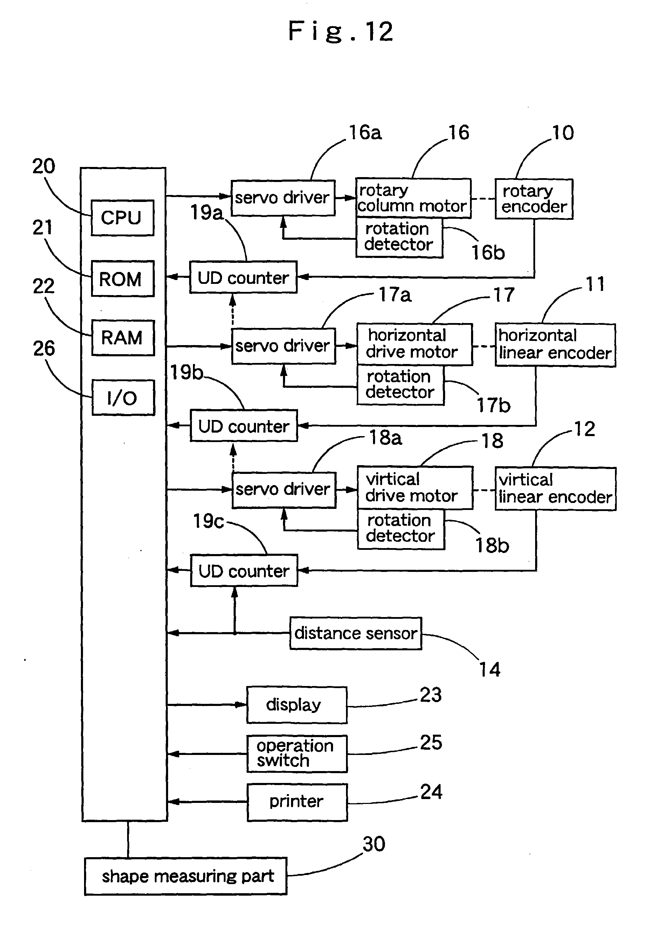

A data processing circuit of the three-dimensional coordinates measuring instrument, as shown in Fig. 12, comprises a microcomputer being a main part, and a CPU (microprocessor) 20 performs the measuring operation of three-dimensional coordinates based on the program data previously stored in a ROM 21. For example, when the three-dimensional coordinates measurement of a surface of a certain product is performed by automatic operation, the coordinates of the portion to be measured on the product surface are previously stored in a RAM or the like and the coordinates data are read out in sequence from a RAM 22, and a rotary column motor 16, a horizontal drive motor 17 and a vertical drive motor 18 are driven and a shape measuring part 30 of a moving head 13 is moved to upper side of each measuring point of the article. Then a distance sensor 14 installed on the shape measuring part 30 acts, and when the distance between the measuring part and the article becomes the prescribed distance previously set, the drive system of each axis is stopped and the shape measuring part 30 is stood still.

Each of the rotary encoder 10, the horizontal linear encoder 11 and the vertical linear encoder 12 as above described is connected to each of exclusive up-down counters 19, and each up-down counter 19 is connected to an input/output circuit 26. The distance sensor 14, a display unit 23 such as a CRT, a printer 24 and an operation switch 25 are connected also to the input/output circuit 26. The output side of the distance sensor 14 is connected also to a latch terminal of each up-down counter 19, and each up-down counter 19 directly inputs the ON signal of the distance sensor 14 as a latch signal and holds the count value.

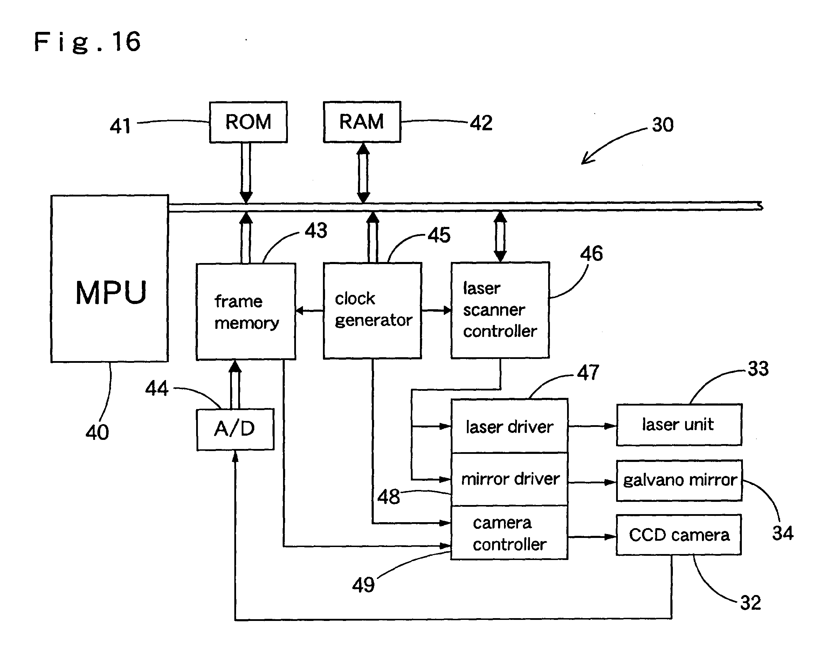

Fig. 16 is a block diagram showing a control circuit of the shape measuring part 30. The control circuit is constituted by a microcomputer being a main part, and comprises an MPU (microprocessor) 40, a ROM 41 and a RAM 42. The MPU 40 performs control processing of the light scanning by the laser slit ray and fetching processing of the image data of the CCD camera 32 and reads out the image data fetched in a frame memory 43 as a storage unit, based on the program data stored previously in the ROM 41, and performs the processing of discriminating the deflection angle based on the brightness information. The MPU 40 also estimates angle of each point on the surface of the article with respect to the axis line based on the deflection angle data, and executes the operation processing of calculating the three-dimensional coordinates of each point based on the estimated angle.

The A/D converter 44 performs A/D conversion of a video signal outputted from the CCD camera 32, and sends the converted signal to the frame memory 43. A clock generator 45 generates a clock signal and supplies the clock signal to each circuit. A linear scanner controller 46 controls the laser unit 33 and the galvano mirror 34, and outputs the control signal to a laser driver 47 and a mirror driver 48 so as to perform the light scanning by the laser slit ray. The laser scanner controller 46 also acts as a blinking device, and operates the laser unit 33 intermittently in the controlled period and blinks the laser ray. A camera controller 49 controls the CCD camera 32, and scans the CCD element so as to output the video signal.

Next, operation of the three-dimensional coordinates measuring instrument in the above-mentioned constitution will be described. When the three-dimensional coordinates of the article are to be measured, the article is held on the measurement table 1 and the data processing circuit is at the stand-by state. The operation switch 25 is operated and the shape measuring part 30 is moved to the measurement start portion on upper side of the article. That is, the rotary column motor 16 is driven to rotate the rotary column 2, and the horizontal drive motor 17 is driven to move the horizontal moving part 4 and the vertical drive motor 18 is driven to move the Z-axis moving part 5, thereby the moving head 13 is moved in any of X. Y. Z directions and the shape measuring part 30 is brought close to the article.

Then the distance sensor 14 acts and when the distance between the case 31 and the article becomes the predetermined value, it is displayed or informed based on the detection signal from the distance sensor 14 and the operator stops each shaft. The measurement preparation operation need not be performed by the operation of the operator, but the drive system of each axis may be stopped and controlled automatically based on the detection signal from the distance sensor 14.

Next using the horizontal position data R and the angle position data θ from the rotary encoder 10, the X coordinates are calculated from the formula $X = R \cos \theta$ and the Y coordinates are calculated from the formula $Y = R \sin \theta$. Also the Z coordinates are calculated using the vertical position data from the vertical linear encoder 12. The data from each of the calculated X coordinates, Y coordinates and Z coordinates are written in the RAM 22.

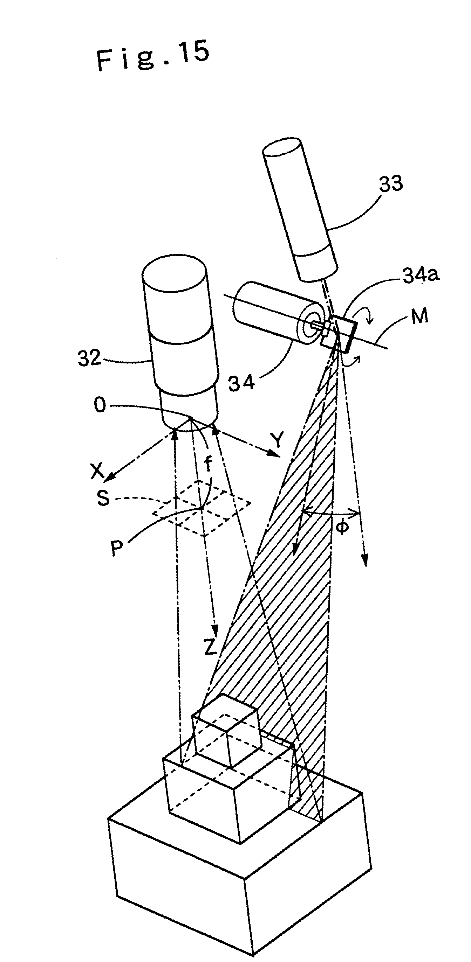

Next the shape measuring part 30 is operated, and by the operation of the laser scan controller 46 and the laser driver 47, the laser ray is outputted from the laser unit 33 (Fig. 15). Then the slit ray blinks at the prescribed period and is irradiated to the article intermittently, and by the operation of the mirror driver 48 and the galvano mirror 34, the mirror part 34a is rotated at the prescribed period, thereby the slit ray is deflected and operated and the light scanning is performed. The surface of the article at this time is photographed by the CCD camera 32, and the light scanning of one time is performed within one frame storage time of the CCD camera 32 and the image data in striped pattern produced as brightness and darkness by the blinking of the slit ray are stored in the frame memory 43.

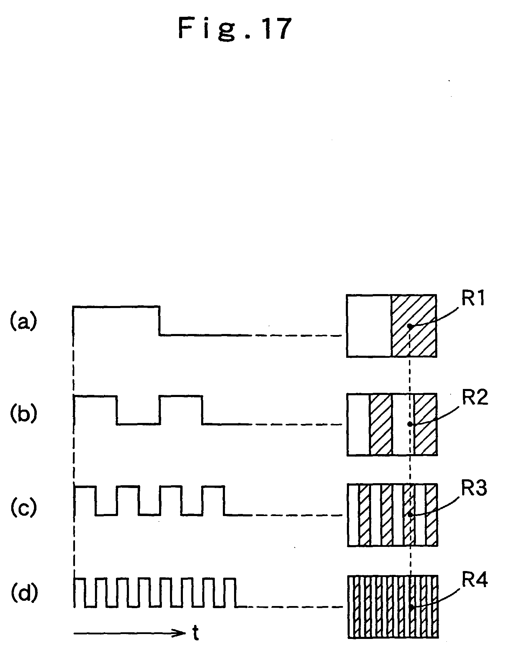

Such light scanning is executed plural times changing the blinking period. For example, when the light scanning in the first time is executed in the prescribed period as shown in Fig. 17(a), the light scanning in the second time is executed in the blinking period at 1/2 of the prescribed period as shown in Fig. 17(b), and the light scanning in the third time is executed in the blinking period at 1/4 of the prescribed period as shown in Fig. 17(c), and the light scanning in the fourth time is executed in the blinking period at 1/8 of the prescribed period as shown in Fig. 17(d). Then the image photographed by the CCD camera 32 becomes the striped pattern of brightness and darkness corresponding to each blinking period as shown in the right side of the timing chart in Fig. 17, and the image data in each scanning are subjected to binarization and stored within the frame memory 43.

Next, the MPU 40 estimates the deflection angle data at any point on the surface of the article based on the brightness information fetched within the frame memory 43. For example, when any point A on the article is thought, as shown in Fig. 17, assuming that the point R1 exists within "darkness" in the image data at the light scanning in the first time, the point R2 exists within "brightness" in the image data at the light scanning in the second time, and the point R3 exists within "darkness" in the image data at the light scanning in the third time, and the point R4 exists within "darkness" in the image data at the light scanning in the fourth time.

Consequently the image data at each light scanning state of the point R show "darkness, brightness, darkness, darkness" in sequence, and the point R4 is positioned within the wedge-shaped space including the darkness of the image data at the light scanning state in the fourth time. The MPU 40 decodes the image data in such space code form thereby the deflection angle data of the wedge-shaped space including the darkness of the image data at the light scanning state in the fourth time with the point R4 positioning can be easily obtained.

Next the MPU 40 calculates the three-dimensional coordinates (Rx, Ry, Rz) of any point R on the article using the above-mentioned deflection angle data. That is, assuming that the coordinates of the lens center point O of the CCD camera 32 be (0, 0, 0), since the coordinates of the center point P of the photographing surface S are positioned at the focal distance f in the Z-axis direction from the lens center point O, the P coordinates becomes (0, 0, f). Since the rotational center axis M of the galvano mirror 34 passes through the coordinates (Mx, 0, Mz) and is in parallel to the Y-axis, the angle $\phi$ between the wedge-shaped space including the point R and the Z-axis can be estimated using the above-mentioned deflection angle data. The coordinates of the center point O are the X coordinates and the Y coordinates calculated from the horizontal position data R and the angle position data θ as above described, and are the Z coordinates estimated by the vertical position data of the vertical linear encoder.

The MPU 40 calculates the three-dimensional coordinates (Rx, Ry, Rz) of any point R on the article using the angle $\phi$, the focal distance f and the coordinates (Sx, Sy, Sz) of the point Rs (point corresponding to the point R) on the photographing surface S as above described, by following operation formulas.

$$Rx = f \cdot (Mx + Mz \cdot \tan\phi) / (Sx + f \cdot \tan\phi)$$

$$Ry = Rx \cdot Sx / f$$

$$Rz = Rx \cdot Sy / f$$

Since the coordinates (Rx, Ry, Rz) are the three-dimensional coordinates data with respect to the center point O being the origin, the X. Y. Z coordinates data of the three-dimensional coordinates measuring instrument by the action of the horizontal moving part 4, the Z-axis moving part 5 and the rotary column 2 are added or subtracted with the calculated coordinates data (Rx, Ry, Rz) of the shape measuring part 30 and the final three-dimensional coordinates are calculated.

According to the three-dimensional coordinates measuring instrument in such manner, since outside shape of an article is measured by a shape measuring part 30 in non-contact state using a CCD camera 32, even when the article is a soft material such as soft plastics or a cloth product, the outside shape can be measured exactly. Also since it is not necessary that a number of points are touched and the coordinates data are fetched as in a touch probe, the measurement can be performed at a short time, and even when fine concave and convex portions exist so that a touch probe can not enter there, the outside shape can be measured well.

A detector sensor 14 detecting the distance from the shape measuring part 30 to the article is installed, and since the shape measurement is performed by the distance sensor 14 in the state that the measuring part is previously brought close to the prescribed distance with respect to the article, even when the Z-axis measuring range by the light scanning of the shape measuring part is 10mm for example and the acting distance is 100mm for example, if the distance of 105mm is detected by the distance sensor and the shape measuring part is operated, the measurement resolving power can be maintained to high precision, for example, 20 - 40 μm and the three-dimensional shape measurement can be performed well.

In the above-mentioned embodiment, although the striped pattern is produced by the light scanning of plural times blinking in the shape measuring part 30 and the photographed image data are read out by the time series space code method and the three-dimensional coordinates of the article are estimated from the image data, the three-dimensional coordinates may be estimated from the image data patterned, for example, using a mechanical pattern mask or using a liquid-crystal shutter.

In the two embodiments as above described, although the horizontal moving part 4 is driven in the horizontal direction by the rotation of the ball screw 6, a timing belt being endless in the horizontal direction may be stretched and arranged between a pair of pulleys, and the horizontal moving part 4 may be coupled with a pair of the timing belt and the timing belt may be rotated and driven by the horizontal drive motor thereby the horizontal moving part 4 can be moved horizontally. Although the Z-axis moving part 5 is driven upward and downward in that the spline shaft 7 is rotated and driven by the drive motor 18 by meshing of a rack 5a provided there and a pinion 8 externally fitted to the spline shaft 7, the Z-axis moving part 5 may be driven upward and downward in that the timing belt is mounted vertically to the Z-axis moving part 5 in place of the rack 5a and is engaged with the pinion 8.

## Claims

1. A three-dimensional coordinates measuring instrument comprising:

   (a) a rotary column stood vertically in rotatable state on a measurement table;
   (b) a rotary column motor for rotating and driving said rotary column;
   (c) a rotary encoder for outputting an angle position signal in response to the rotational angle of said rotary column;
   (d) a horizontal arm fixed horizontally to the upper end of said rotary column;
   (e) a horizontal moving part arranged on said horizontal arm in movable state in the horizontal direction;
   (f) a horizontal drive motor arranged at the rotary column side on said horizontal arm for moving and driving said horizontal moving part in the horizontal direction;
   (g) a horizontal linear encoder for outputting a horizontal position signal indicating the moving position of said horizontal moving part;
   (h) a Z-axis moving part arranged within said horizontal moving part in movable state vertically;
   (i) a vertical drive motor arranged at the rotary column side on said horizontal arm for moving and driving said Z-axis moving part in the vertical direction;
   (j) a vertical linear encoder for outputting a Z-coordinates signal indicating the moving position of said Z-axis moving part;
   (k) a measuring unit mounted on a moving head provided at the lower end of said Z-axis moving part, and having means for generating a contact signal when the top end is contacted with an article to be measured on said measurement table;
   (l) three-axes control means for driving and controlling the rotary column motor, the horizontal drive motor and the vertical drive motor, in response to previously stored position data or operation of an operation switch, and for moving said measuring unit at the top end of said moving head in any direction; and
   (m) data processing means for inputting signals indicating the rotational angle position, the horizontal position and the vertical position sent from said rotary encoder, said horizontal linear encoder and the vertical linear encoder, for calculating the Z coordinates from the vertical position data based on the vertical position signal, and for calculating the X coordinates and the Y coordinates from the horizontal position data based on the horizontal position signal and the angle position data based on the rotational angle position signal of said rotary encoder.

2. A three-dimensional coordinates measuring instrument as set forth in claim 1, wherein up-down counters are provided respectively to count pulse signals indicating the rotational angle position, the horizontal position and the vertical position from the rotary encoder, the horizontal linear encoder and the vertical linear encoder, and a counter circuit is provided to latch the up-down counters when the contact signal from the measuring unit is inputted, and the data processing means performs processing of reading the count value of each counter when the counter circuit latches, calculating the Z-coordinates from the data corresponding to the vertical position, and calculating the X coordinates and the Y coordinates from the data corresponding to the horizontal position and the data corresponding to the rotational angle position of the rotary encoder.

3. A three-dimensional coordinates measuring instrument comprising:

   (a) a rotary column stood vertically in rotatable state on a measurement table;
   (b) a rotary column motor for rotating and driving said rotary column;
   (c) a rotary encoder for outputting an angle position signal in response to the rotational angle of said rotary column ;
   (d) a horizontal arm fixed horizontally to the upper end of said rotary column;

(e) a horizontal moving part arranged on said horizontal arm in movable state in the horizontal direction;

(f) a horizontal drive motor arranged at the rotary column side on said horizontal arm for moving and driving said horizontal moving part in the horizontal direction;

(g) a horizontal linear encoder for outputting a horizontal position signal indicating the moving position of said horizontal moving part;

(h) a X-axis moving part arranged within said horizontal moving part in movable state vertically;

(i) a vertical drive motor arranged at the rotary column side on said horizontal arm for moving and driving said Z-axis moving part in the vertical direction;

(j) a vertical linear encoder for outputting a Z-coordinates signal indicating the moving position of said Z-axis moving part;

(k) a shape measuring part in non-contact state mounted on a moving head provided at the lower end of said Z-axis moving part, said shape measuring part having a laser light source generating a laser ray and outputting the laser ray as a slit ray, a deflection illumination device for irradiating and deflecting the slit ray to a surface of an article to be measured and performing the light scanning, a CCD camera for photographing the surface of the article irradiated by the slit ray, and a distance sensor for detecting distance from the shape measuring part to the article;

(l) three-axes control means for driving and controlling the rotary column motor, the horizontal drive motor and the vertical drive motor, in response to previously stored position data or operation of an operation switch, and for moving said shape measuring part of said moving head in any direction;

(m) a storage unit for detecting and storing the image data outputted from said CCD camera; and

(n) an operation processing unit for calculating the three-dimensional coordinates of the surface of the article from the X coordinates, the Y coordinates, the Z coordinates and the image data calculated based on signals indicating the rotational angle position, the horizontal position and the vertical position sent from said rotary encoder, said horizontal linear encoder, and said vertical linear encoder.

# Fig.1

# Fig.2

# Fig.3

# Fig.4

# Fig.5

# Fig.6

# Fig.7

# Fig.8

# Fig.9

# Fig.10

# Fig.11

# Fig. 12

# Fig.13

# Fig.14

Fig.15

# Fig.16

EP 1 003 009 A1

# Fig.17

(a)

(b)

(c)

(d)

t

R1

R2

R3

R4

EP 1 003 009 A1

**European Patent Office**

# EUROPEAN SEARCH REPORT

Application Number

EP 98 31 0299

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 1997, no. 01, 31 January 1997 (1997-01-31) & JP 08 247755 A (DAITO M II KK;TOKAI KIYOUHAN KK), 27 September 1996 (1996-09-27) * abstract * | 1 | G01B7/008 |
| A | GB 2 174 216 A (MITUTOYO MFG CO LTD;SHIMIZU KIDEN CO LTD) 29 October 1986 (1986-10-29) * page 2, line 122 - page 3, line 17 * | 2 | |
| A | DE 196 39 780 A (LEITZ BROWN & SHARPE MESTECHNI) 2 April 1998 (1998-04-02) * the whole document * | 1,3 | |
| A | EP 0 504 755 A (ZEISS CARL FA ;ZEISS STIFTUNG (DE)) 23 September 1992 (1992-09-23) * abstract; figures * | 1,3 | TECHNICAL FIELDS SEARCHED (Int.Cl.7) |
| A | WO 88 02843 A (RENISHAW PLC) 21 April 1988 (1988-04-21) * abstract; figures * | 1,3 | G01B |
| A | GB 2 069 142 A (MCMURTRY D R) 19 August 1981 (1981-08-19) * the whole document * | 1 | |

The present search report has been drawn up for all claims

| Place of search | Date of completion of the search | Examiner |
|---|---|---|
| THE HAGUE | 24 January 2000 | Ramboer, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

## ANNEX TO THE EUROPEAN SEARCH REPORT
## ON EUROPEAN PATENT APPLICATION NO.

EP 98 31 0299

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2000

| Patent document cited in search report | | Publication date | Patent family member(s) | | Publication date |
|---|---|---|---|---|---|
| JP 08247755 | A | 27-09-1996 | NONE | | |
| GB 2174216 | A | 29-10-1986 | JP | 1676946 C | 26-06-1992 |
| | | | JP | 3039614 B | 14-06-1991 |
| | | | JP | 61213615 A | 22-09-1986 |
| | | | JP | 61213616 A | 22-09-1986 |
| | | | CN | 1009221 B | 15-08-1990 |
| | | | DE | 3609246 A | 02-10-1986 |
| | | | US | 4799170 A | 17-01-1989 |
| DE 19639780 | A | 02-04-1998 | NONE | | |
| EP 0504755 | A | 23-09-1992 | DE | 4109483 A | 24-09-1992 |
| | | | DE | 59206208 D | 13-06-1996 |
| | | | JP | 5099617 A | 23-04-1993 |
| | | | US | 5291270 A | 01-03-1994 |
| WO 8802843 | A | 21-04-1988 | EP | 0288506 A | 02-11-1988 |
| | | | JP | 1501016 T | 06-04-1989 |
| | | | US | 4819491 A | 11-04-1989 |
| GB 2069142 | A | 19-08-1981 | DE | 3103166 A | 10-12-1981 |
| | | | JP | 1046262 B | 06-10-1989 |
| | | | JP | 1567357 C | 10-07-1990 |
| | | | JP | 56134155 A | 20-10-1981 |
| | | | US | 4451892 A | 29-05-1984 |
| | | | US | 4561058 A | 24-12-1985 |

EPO FORM P0459

For more details about this annex : see Official Journal of the European Patent Office, No. 12/82